# FASCICULE DE BREVET EUROPEEN

(11) **EP 0 982 064 B1**
(45) Date de publication et mention de la délivrance du brevet: **04.05.2005**
(21) Numéro de dépôt: 99402052.7
(22) Date de dépôt: 12.08.1999
(51) Int. Cl.: B01D 53/047, B01J 20/18

(54) **Procédé PSA utilisant un adsorbant aggloméré constitué d'une phase zéolitique et d'un liant**
PSA Verfahren unter Verwendung eines agglomerierten Adsorptionsmittels mit Zeolith und Bindemittel
PSA process using an agglomerated adsorbent comprising zeolite and binding material

(30) Priorité: 21.08.1998 FR 9810622
(43) Date de publication de la demande: 01.03.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Labasque, Jacques, 78000 Versailles (FR); Moreau, Serge, 78140 Velizy-Villacoublay (FR); Lledos, Bernard, 78280 Guyancourt (FR)
(74) Mandataire: Pittis, Olivier

(56) Documents cités:
- EP-A- 0 667 183
- EP-A- 0 685 430
- EP-A- 0 855 209
- US-A- 5 174 979

## Description

L'invention concerne un procédé de type PSA, et plus particulièrement de type VSA, de séparation d'un flux gazeux, en particulier d'un flux gazeux contenant essentiellement de l'oxygène et de l'azote, tel l'air.

Les gaz de l'air, tels notamment l'oxygène et l'azote, présentent un grand intérêt industriel. Actuellement, une des techniques non-cryogéniques utilisées pour produire ces gaz est la technique dite "PSA" (pour Pressure Swing Adsorption), laquelle recouvre non seulement les procédés PSA proprement dits, mais aussi les procédés analogues, tels les procédés VSA (Vacuum Swing Adsorption) ou MPSA (Mixed Pressure Swing Adsorption).

Selon cette technique PSA, lorsque le mélange gazeux à séparer est l'air et que le composant à récupérer est l'oxygène, ledit oxygène est séparé dudit mélange gazeux grâce à une adsorption préférentielle d'au moins l'azote sur un matériau adsorbant préférentiellement au moins l'azote et soumis à des cycles de pression donnée dans la zone de séparation.

L'oxygène ne s'adsorbant pas ou peu est récupéré en sortie de ladite zone de séparation; celui-ci à une pureté, en général, supérieure à 90 %, voire à 93%.

Plus généralement, un procédé PSA pour la séparation non-cryogénique d'un mélange gazeux comprenant un premier composé s'adsorbant préférentiellement sur un matériau adsorbant et un deuxième composé s'adsorbant moins préférentiellement sur ledit matériau adsorbant que ledit premier composé, en vue de la production dudit deuxième composé, comprend de manière cyclique :
- une étape d'adsorption préférentielle d'au moins ledit premier composé sur ledit matériau adsorbant, à une pression d'adsorption dite "pression haute", avec récupération d'au moins une partie du deuxième composé ainsi produit;
- une étape de désorption du premier composé ainsi piégé par l'adsorbant, à une pression de désorption inférieure à la pression d'adsorption, dite "pression basse";
- une étape de recompression de la zone de séparation comprenant l'adsorbant, par passage de ladite pression basse à ladite pression haute.

Cependant, il est connu que l'efficacité de séparation d'un mélange gazeux, tel l'air, dépend de nombreux paramètres, notamment la pression haute, la pression basse, le type de matériau adsorbant utilisé et l'affinité de celui-ci pour les composés à séparer, la composition du mélange gazeux à séparer, la température d'adsorption du mélange à séparer, la taille des particules d'adsorbant, la composition de ces particules et le gradient de température s'établissant à l'intérieur du lit d'adsorbant.

A ce jour, bien qu'aucune loi de comportement générale n'ait pu être déterminée, sachant qu'il est très difficile de relier ces différents paramètres entre eux, il est également connu que la nature et les propriétés de l'adsorbant jouent un rôle primordial dans l'efficacité globale du procédé.

Actuellement, les zéolites sont les adsorbants les plus utilisés dans les procédés PSA.

Les particules zéolitiques contiennent habituellèment des cations métalliques mono, di et/ou trivalents, par exemples des cations de métaux alcalins, alcalino-terreux, de métaux de transition et/ou lanthanides, incorporés lors de la synthèse des particules de zéolite et/ou insérés subséquemment par une technique d'échange d'ions, c'est-à-dire, en général, par mise en contact des particules de zéolite non-échangées ou zéolite brute avec une solution d'un ou plusieurs sels métalliques comprenant le ou les cations à incorporer dans la structure zéolitique et récupération subséquente des particules de zéolite échangée, c'est-à-dire de zéolite contenant une quantité donnée de cations métalliques. La proportion de cations métalliques introduits dans la structure zéolitique par rapport à la capacité totale d'échange est appelée le taux d'échange, lequel est compris entre 0 et 100 %.

Par ailleurs, les adsorbants les plus utilisés dans les procédés de type PSA de séparation de gaz, en particulier de l'air, sont des zéolites, notamment de type X ou LSX, fortement échangées, en général à plus de 80%, voire à plus de 95%, avec cations de métaux très coûteux, tels notamment des cations lithium. De tels zéolites sont notamment décrites dans les documents EP-A-486384, EP-A-606848, EP-A-589391, EP-A-589406, EP-A-548755, US-A-268023, EP-A-109063 et EP-A-760248.

(En outre, le document EP-A-667183 enseigne un adsorbant zéolitique de type X utilisable pour séparer des mélanges gazeux, notamment l'air, contenant de 50 à 95% d'ions Li, de 4 à 50% d'ions trivalents et de 0 à 15% d'autres ions, tels que Ca, Sr, Mg, Cu, Ba, Z, K, Na, ammonium, hydronium et leurs mélanges.

Préférentiellement, l'adsorbant contient essentiellement des cations Li et trivalents, et une quantité d'au maximum 1% d'autres ions, en particulier d'ions de type Mg, Zn, Ca ou Sr.

Cependant, les performances dudit procédé, notamment la capacité ou la sélectivité d'adsorption, et le coût global de production du gaz peuvent varier considérablement selon l'adsorbant mis en oeuvre dans le procédé PSA.

Le but de la présente invention est alors de proposer un procédé de séparation de gaz, en particulier un procédé PSA de séparation des gaz de l'air, mettant en oeuvre un adsorbant aggloméré comprenant une phase zéolitique et au moins un liant susceptible de conduire à des performances meilleures que celles des procédé utilisant des adsorbants de l'art antérieur.

La présente invention concerne alors un procédé PSA de séparation d'un flux gazeux contenant au moins un premier composé gazeux s'adsorbant préférentiellement sur au moins un adsorbant et au moins un deuxième composé gazeux s'adsorbant moins préférentiellement sur au moins ledit adsorbant que ledit premier composé gazeux, ledit adsorbant est formé d'un agglomérat comprenant essentiellement une phase zéolitique et au moins un liant, caractérisé en ce que ledit adsorbant contient des éléments Si, Al, Li, Na, Mg, K et Ca, les proportions totales desdits éléments dans ledit adsorbant étant telles que :
- le rapport Si/Al est compris entre 1 et 2.4,
- le rapport Na/Li est compris entre 0.012 et 0.300,
- le rapport Mg/Li est compris entre 0.012 et 0.400,
- le rapport Ca/Li est compris entre 0.012 et 0.200,
- et le rapport K/Li est compris entre 0.001 et 0.060.

La proportion ou pourcentage (%) en un élément donné est exprimée par rapport à la quantité totale d'éléments Li, Na, Mg, Ca et K présents dans l'adsorbant aggloméré.

Selon le cas, l'adsorbant aggloméré de l'invention peut inclure l'une ou plusieurs des caractéristiques suivantes :
- le liant comprend une argile du groupe formé par l'attapulgite, la bentonite, le kaolin ou leur mélanges, ou une argile analogue,
- le rapport Si/Al est compris entre 1.15 et 1.70,
- l'adsorbant contient une zéolite de type faujasite, de préférence X ou LSX (Low Silica X), c'est-à-dire une zéolite X pauvre en silice.
- le rapport Na/Li est compris entre 0.015 et 0.250, le rapport Mg/Li est compris entre 0.037 et 0.327, le rapport Ca/Li est compris entre 0.024 et 0.145 et/ou le rapport K/Li est compris entre 0.001 et 0.036.
- le rapport Na/Li est compris entre 0.018 et 0.230, le rapport Mg/Li est compris entre 0.050 et 0.267, le rapport Ca/Li est compris entre 0.038 et 0.100 et/ou le rapport K/Li est compris entre 0.001 et 0.025.
- l'adsorbant contient 50% à 85% d'éléments Li, 1% à 25% d'éléments Na, 1% à 20% d'éléments Mg, 1% à 10% d'éléments Ca et de 0.1 à 3% d'éléments K.
- l'adsorbant contient 55% à 82% d'éléments Li, 2% à 20% d'éléments Na, 3% à 18% d'éléments Mg, 2% à 8% d'éléments Ca et de 0.1 à 2% d'éléments K.
- l'adsorbant contient 60% à 81% d'éléments Li, 2.5% à 15% d'éléments Na, 4% à 16% d'éléments Mg, 3% à 6% d'éléments Ca et de 0.1 à 1.5% d'éléments K.
- la proportion en masse de liant est d'au plus 30% de la masse totale d'une particule d'adsorbant, de préférence, d'au plus 25%.
- le flux gazeux à séparer comprend de l'azote et au moins un composé moins polaire, notamment de l'oxygène et/ou de l'hydrogène, et, de préférence le flux gazeux est de l'air, le premier composé gazeux étant l'azote et le deuxième composé gazeux étant l'oxygène. L'air étant, dans le cadre de la présente invention, de l'air contenu à l'intérieur d'un bâtiment ou d'une enceinte chauffée ou non, ou de l'air extérieur, c'est-à-dire dans les conditions atmosphériques, pris tel quel ou éventuellement prétraité.
- le premier composé gazeux est l'azote et le deuxième composé gazeux est l'oxygène; et on produit un flux gazeux riche en oxygène, c'est-à-dire comprenant, en général, au moins 90% d'oxygène,
- il est de type VSA (Vacuum Swing Adsorption),
- la pression haute d'adsorption est comprise entre 10⁵ Pa et 10⁷ Pa, de préférence, de l'ordre de 10⁵ Pa à 10⁶ Pa, et/ou la pression basse de désorption est comprise entre10⁴ Pa et 10⁶ Pa, de préférence, de l'ordre de 10⁴ Pa à 10⁵ Pa,
- la température d'alimentation est comprise entre 10°C et 80°C, de préférence entre 25°C et 60°C.

L'invention concerne également un adsorbant aggloméré, susceptible d'être mis en oeuvre dans un procédé susmentionné, caractérisé en ce que ledit adsorbant aggloméré est formé d'un agglomérat comprenant essentiellement une phase zéolitique et au moins un liant, caractérisé en ce que l'adsorbant contient des éléments Si, Al, Li, Na, Mg, K et Ca, les proportions totales desdits éléments dans ledit adsorbant étant telles que :
- le rapport Si/Al est compris entre 1 et 2.4,
- le rapport Na/Li est compris entre 0.012 et 0.300,
- le rapport Mg/Li est compris entre 0.012 et 0.400,
- le rapport Ca/Li est compris entre 0.012 et 0.200,
- et le rapport K/Li est compris entre 0.001 et 0.060.

L'invention concerne, en outre, un dispositif susceptible de mettre en oeuvre un procédé PSA, tel le procédé sus-décrit, comprenant au moins un adsorbeur et, préférentiellement, de 1 à 3 adsorbeurs, notamment à géométrie radiale.

Il faut noter que la présente invention s'applique aussi à chacun des adsorbeurs d'un procédé mettant en oeuvre plusieurs adsorbants, par exemple un procédé multilits.

L'invention va maintenant être décrite plus en détail à l'aide d'exemples donnés à titre illustratif, mais non limitatif.

### Exemples

Les adsorbants A à G constitués essentiellement d'une phase zéolitique et d'un liant, dont les compositions en éléments lithium, sodium, magnésium, calcium et potassium sont données dans le tableau I suivant (le rapport Si/Al étant d'environ 1.72), sont utilisées comme adsorbant dans un procédé de type VSA de séparation des gaz de l'air par adsorption pour produire de l'oxygène ayant une pureté d'environ 93%.

Le taux de liant dans les adsorbants A à G est d'environ 20% et la phase zéolitique est de type X.

**Tableau I**

| Composition de la bille agglomérée | | | | | |
|---|---|---|---|---|---|
| Adsorbant n° | Li (en % en équivalents) | Na (en % en équivalents) | Mg (en % en équivalents) | Ca (en % en équivalents) | K (en % en équivalents) |
| A | 0.00 | 77.98 | 14.27 | 6.13 | 1.63 |
| B | 11.02 | 70.91 | 13.40 | 4.45 | 0.22 |
| C | 27.93 | 53.81 | 13.02 | 4.91 | 0.33 |
| D | 42.26 | 38.75 | 13.32 | 5.32 | 0.35 |
| E | 60.12 | 20.26 | 13.61 | 5.37 | 0.64 |
| F | 67.23 | 13.00 | 13.90 | 5.28 | 0.58 |
| G | 80.37 | 1.57 | 13.05 | 4.51 | 0.50 |

Les pourcentages (%) étant exprimés par rapport à la quantité totale d'éléments Li, Na, Mg, Ca et K présents dans l'adsorbant.

Dans ces essais, les conditions de mise en oeuvre du procédé VSA sont les suivantes :
- 2 adsorbeurs fonctionnant en parallèle
- pression d'adsorption : 1,4.10⁵ Pa
- pression de désorption : 0,4.10⁵ Pa
- température de l'air d'alimentation : 35°C environ
- adsorbant : lit de zéolite A à G; les adsorbant A à E n'entrant pas dans le cadre de l'invention, alors que les adsorbants F et G sont conformes à l'invention.
- cycles de production : 2 x 40 secondes environ

Les performances, c'est-à-dire le rendement et la productivité, du procédé VSA, obtenues pour les adsorbants A à G testées sont données dans le tableau II suivant sous forme de valeurs indicées (la référence étant l'adsorbant A).

Le rendement (exprimé en %) est défini comme étant le quotient de la quantité d'oxygène pur contenu dans l'oxygène produit par la quantité d'oxygène pur introduit

La productivité (exprimée en Nm³/h/m³ d'adsorbant) est définie comme étant le quotient de la quantité d'oxygène pur contenu dans l'oxygène produit par la quantité (volume ou masse) d'adsorbant utilisé pour cette production.

**Tableau II :**

| Performances du procédé VSA | | |
|---|---|---|
| Adsorbant n° | Rendement | Productivité |
| A | 100.0 | 100.0 |
| B | id | id |
| C | id | id |
| D | id | id |
| E | 103.8 | 104.7 |
| F | 112.0 | 117.7 |
| G | 131.6 | 183.7 |
| id : résultat analogue à adsorbant A | | |

Les résultats obtenus montrent que les performances (rendement et productivité) les meilleures sont obtenues pour les adsorbants conformes à la présente invention, à savoir les adsorbants F et G.

La présente invention n'est pas limitée au domaine de la production d'oxygène à partir d'air et peut donc, dès lors, être appliquée à la séparation d'autres flux gazeux, tels notamment à des flux contenant de l'hydrogène, du dioxyde de carbone et/ou du monoxyde de carbone, en particulier à la production de gaz de synthèse ou "syngaz".

## Revendications

1. Procédé PSA de séparation d'un flux gazeux contenant au moins un premier composé gazeux s'adsorbant préférentiellement sur au moins un adsorbant et au moins un deuxième composé gazeux s'adsorbant moins préférentiellement sur au moins ledit adsorbant que ledit premier composé gazeux, ledit adsorbant est formé d'un agglomérat comprenant essentiellement une phase zéolitique et au moins un liant, **caractérisé en ce que** ledit adsorbant contient des éléments Si, Al, Li, Na, Mg, K et Ca, les proportions totales desdits éléments dans ledit adsorbant étant telles que :
- le rapport Si/Al est compris entre 1 et 2.4,
- le rapport Na/Li est compris entre 0.012 et 0.300,
- le rapport Mg/Li est compris entre 0.012 et 0.400,
- le rapport Ca/Li est compris entre 0.012 et 0.200,
- et le rapport K/Li est compris entre 0.001 et 0.060.

2. Procédé selon la revendication 1, **caractérisé en ce que** le rapport Si/Al est compris entre 1.15 et 1.70.

3. Procédé selon l'une des revendications 1 ou 2, **caractérisé en ce que** l'adsorbant contient une zéolite de type faujasite, de préférence X ou LSX.

4. Procédé selon l'une des revendications 1 à 3, **caractérisé en ce que** le rapport Na/Li est compris entre 0.015 et 0.250, le rapport Mg/Li est compris entre 0.037 et 0.327, le rapport Ca/Li est compris entre 0.024 et 0.145 et/ou le rapport K/Li est compris entre 0.001 et 0.036.

5. Procédé selon l'une des revendications 1 à 4, **caractérisé en ce que** l'adsorbant contient 50% à 85% d'éléments Li, 1% à 25% d'éléments Na, 1% à 20% d'éléments Mg, 1% à 10% d'éléments Ca et de 0.1 à 3% d'éléments K.

6. Procédé selon l'une des revendications 1 à 5, **caractérisé en ce que** l'adsorbant contient 55% à 82% d'éléments Li, 2% à 20% d'éléments Na, 3% à 18% d'éléments Mg, 2% à 8% d'éléments Ca et de 0.1 à 2% d'éléments K.

7. Procédé selon l'une des revendications 1 à 6, **caractérisé en ce que** la proportion en masse de liant est d'au plus 30% de la masse totale d'une particule d'adsorbant, de préférence, d'au plus 25%.

8. Procédé selon l'une des revendications 1à 7, **caractérisé en ce qu'**il est de type VSA.

9. Procédé selon l'une des revendications 1à 8, **caractérisé en ce que** le flux gazeux à séparer comprend de l'azote et au moins un composé gazeux moins polaire, notamment de l'oxygène et/ou de l'hydrogène, et, de préférence le flux gazeux est de l'air, le premier composé gazeux étant l'azote et le deuxième composé gazeux étant l'oxygène.

10. Adsorbant aggloméré, susceptible d'être mis en oeuvre dans un procédé selon l'une des revendications 1 à 9, **caractérisé en ce que** ledit adsorbant aggloméré est formé d'un agglomérat comprenant essentiellement une phase zéolitique et au moins un liant, **caractérisé en ce que** ledit adsorbant contient des éléments Si, Al, Li, Na, Mg, K et Ca, les proportions totales desdits éléments dans ledit adsorbant étant telles que :
- le rapport Si/Al est compris entre 1 et 2.4,
- le rapport Na/Li est compris entre 0.012 et 0.300,
- le rapport Mg/Li est compris entre 0.012 et 0.400,
- le rapport Ca/Li est compris entre 0.012 et 0.200,
- et le rapport K/Li est compris entre 0.001 et 0.060.

## Patentansprüche

1. PSA-Verfahren zur Trennung eines Gasstroms, der mindestens eine erste gasförmige Verbindung, die an mindestens einem Adsorptionsmittel bevorzugt adsorbiert wird, und mindestens eine zweite gasförmige Verbindung, die an dem mindestens einen Adsorptionsmittel weniger bevorzugt adsorbiert wird als die erste gasförmige Verbindung, enthält, bei dem das Adsorptionsmittel aus einem im wesentlichen eine zeolitische Phase und mindestens ein Bindemittel enthaltenden Agglomerat gebildet wird, **dadurch gekennzeichnet, daß** das Adsorptionsmittel die Elemente Si, Al, Li, Na, Mg, K und Ca in solchen Gesamtanteilen enthält, daß:
- das Si/Al-Verhältnis zwischen 1 und 2,4 liegt,
- das Na/Li-Verhältnis zwischen 0,012 und 0,300 liegt,
- das Mg/Li-Verhältnis zwischen 0,012 und 0,400 liegt,
- das Ca/Li-Verhältnis zwischen 0,012 und 0,200 liegt,
- das K/Li-Verhältnis zwischen 0,001 und 0,060 liegt.

2. Verfahren nach Anspruch 1, **dadurch gekennzeichnet, daß** das Si/Al-Verhältnis zwischen 1,15 und 1,70 liegt.

3. Verfahren nach Anspruch 1 oder 2, **dadurch gekennzeichnet, daß** das Adsorptionsmittel einen Zeolith vom Faujasit-Typ, vorzugsweise vom Typ X oder LSX, enthält.

4. Verfahren nach einem der Ansprüche 1 bis 3, **dadurch gekennzeichnet, daß** das Na/Li-Verhältnis zwischen 0,015 und 0,250 liegt, das Mg/Li-Verhältnis zwischen 0,037 und 0,327 liegt, das Ca/Li-Verhältnis zwischen 0,024 und 0,145 liegt und/oder das K/Li-Verhältnis zwischen 0,001 und 0,036 liegt.

5. Verfahren nach einem der Ansprüche 1 bis 4, **dadurch gekennzeichnet, daß** das Adsorptionsmittel 50 bis 85% Li, 1 bis 25% Na, 1 bis 20% Mg, 1 bis 10% Ca und 0,1 bis 3% K enthält.

6. Verfahren nach einem der Ansprüche 1 bis 5, **dadurch gekennzeichnet, daß** das Adsorptionsmittel 55 bis 82% Li, 2 bis 20% Na, 3 bis 18% Mg, 2 bis 8% Ca und 0,1 bis 2% K enthält.

7. Verfahren nach einem der Ansprüche 1 bis 6, **dadurch gekennzeichnet, daß** der Massenanteil des Bindemittels höchstens 30% der Gesamtmasse eines Adsorptionsmittelteilchens, vorzugsweise höchstens 25%, beträgt.

8. Verfahren nach einem der Ansprüche 1 bis 7, **dadurch gekennzeichnet, daß** es sich um ein VSA-Verfahren handelt.

9. Verfahren nach einem der Ansprüche 1 bis 8, **dadurch gekennzeichnet, daß** der zu trennende Gasstrom Stickstoff und mindestens eine weniger polare gasförmige Verbindung, insbesondere Sauerstoff und/oder Wasserstoff, enthält und es sich vorzugsweise bei dem Gasstrom um Luft handelt, wobei es sich bei der ersten gasförmigen Verbindung um Stickstoff und bei der zweiten gasförmigen Verbindung um Sauerstoff handelt.

10. Zur Verwendung bei einem Verfahren nach einem der Ansprüche 1 bis 9 geeignetes agglomeriertes Adsorptionsmittel, **dadurch gekennzeichnet, daß** das agglomerierte Adsorptionsmittel aus einem im wesentlichen eine zeolitische Phase und mindestens ein Bindemittel enthaltenden Agglomerat gebildet wird, **dadurch gekennzeichnet, daß** das Adsorptionsmittel die Elemente Si, Al, Li, Na, Mg, K und Ca in solchen Gesamtanteilen enthält, daß:
- das Si/Al-Verhältnis zwischen 1 und 2,4 liegt,
- das Na/Li-Verhältnis zwischen 0,012 und 0,300 liegt,
- das Mg/Li-Verhältnis zwischen 0,012 und 0,400 liegt,
- das Ca/Li-Verhältnis zwischen 0,012 und 0,200 liegt,
- das K/Li-Verhältnis zwischen 0,001 und 0,060 liegt.

## Claims

1. PSA process for separating a gas flow containing at least one first gas compound which is adsorbed preferentially on at least one adsorbent, and at least one second gas compound which is adsorbed less preferentially on at least the said adsorbent than the said first gas compound, the said adsorbent being formed by an aggregate comprising essentially a zeolite phase and at least one binder, **characterized in that** the said adsorbent contains elements Si, Al, Li, Na, Mg, K and Ca, the total proportions of the said elements in the said adsorbent being such that:
- the Si/Al ratio is between 1 and 2.4,
- the Na/Li ratio is between 0.012 and 0.300,
- the Mg/Li ratio is between 0.012 and 0.400,
- the Ca/Li ratio is between 0.012 and 0.200,
- and the K/Li ratio is between 0.001 and 0.060.

2. Process according to Claim 1, **characterized in that** the Si/Al ratio is between 1.15 and 1.70.

3. Process according to either of Claims 1 or 2, **characterized in that** the adsorbent contains a zeolite of the faujasite, preferably X or LSX, type.

4. Process according to one of Claims 1 to 3, **characterized in that** the Na/Li ratio is between 0.015 and 0.250, the Mg/Li ratio is between 0.037 and 0.327, the Ca/Li ratio is between 0.024 and 0.145 and/or the K/Li ratio is between 0.001 and 0.036.

5. Process according to one of Claims 1 to 4, **characterized in that** the adsorbent contains 50% to 85% of element Li, 1% to 25% of element Na, 1% to 20% of element Mg, 1% to 10% of element Ca and 0.1 to 3% of element K.

6. Process according to one of Claims 1 to 5, **characterized in that** the adsorbent contains 55% to 82% of element Li, 2% to 20% of element Na, 3% to 18% of element Mg, 2% to 8% of element Ca and 0.1 to 2% of element K.

7. Process according to one of Claims 1 to 6, **characterized in that** the proportion by mass of binder is at most 30% of the total mass of an adsorbent particle, preferably at most 25%.

8. Process according to one of Claims 1 to 7, **characterized in that** it is of the VSA type.

9. Process according to one of Claims 1 to 8, **characterized in that** the gas flow to be separated comprises nitrogen and at least one less polar gas compound, in particular oxygen and/or hydrogen and, preferably, the gas flow is air, the first gas compound being nitrogen and the second gas compound being oxygen.

10. Aggregated adsorbent capable of being employed in a process according to one of Claims 1 to 9, **characterized in that** the said aggregated adsorbent is in the form of an aggregate comprising essentially a zeolite phase and at least one binder, **characterized in that** the said adsorbent contains elements Si, Al, Li, Na, Mg, K and Ca, the total proportions of the said elements in the said adsorbent being such that:
- the Si/Al ratio is between 1 and 2.4,
- the Na/Li ratio is between 0.012 and 0.300,
- the Mg/Li ratio is between 0.012 and 0.400,
- the Ca/Li ratio is between 0.012 and 0.200,
- and the K/Li ratio is between 0.001 and 0.060.
